# EUROPÄISCHE PATENTSCHRIFT

(11) **EP 3 195 763 B1**
(45) Veröffentlichungstag und Bekanntmachung des Hinweises auf die Patenterteilung: **03.06.2020**
(21) Anmeldenummer: 16203953.1
(22) Anmeldetag: 14.12.2016
(51) Int. Cl.: A47J 27/024, A47J 27/62, H05B 1/02

(54) **GARSYSTEM UND VERFAHREN ZUM BETREIBEN EINES GARSYSTEMS UND GARGUTBEHÄLTER**
COOKING SYSTEM AND METHOD FOR OPERATING A COOKING SYSTEM AND COOKED GOODS CONTAINER
SYSTÈME DE CUISSON ET PROCÉDÉ DE FONCTIONNEMENT D'UN SYSTÈME DE CUISSON ET RÉCIPIENT DE PRODUIT À CUIRE

(30) Priorität: 20.01.2016 DE 102016100851
(43) Veröffentlichungstag der Anmeldung: 26.07.2017
(73) Patentinhaber: Miele & Cie. KG, 33332 Gütersloh (DE)
(72) Erfinder: Metz, Thomas, 32257 Bünde (DE); Bergmeier, Tino, 32257 Bünde (DE); Ebke, Daniel, Dr., 33613 Bielefeld (DE)

(56) Entgegenhaltungen:
- EP-A1- 2 712 526
- DE-A1- 19 828 170

## Beschreibung

Die vorliegende Erfindung betrifft ein Garsystem und ein Verfahren zum Betreiben eines solchen Garsystems und einen Gargutbehälter. Das Garsystem umfasst wenigstens eine Gareinrichtung mit wenigstens einer Heizquelle und wenigstens einen Gargutbehälter mit wenigstens einem Zubereitungsraum zur Aufnahme und Behandlung von Gargut.

Das Erhitzen bzw. Aufkochen von Lebensmitteln bedarf oft sehr unterschiedlichen Anforderungen. So muss beispielsweise Milch unter ständiger Beobachtung erhitzt werden, um ein Überkochen zu verhindern. Das Schmelzen von Schokolade erfolgt beispielsweise bei eher niedrigen Temperaturen von unter 50°, um Farbveränderungen und Anbrennen zu verhindern. Für solche Zwecke werden häufig Wasserbadtöpfe bzw. Simmertöpfe eingesetzt. Solche Töpfe sind meist doppelwandig ausgeführt und weisen einen mit Wasser gefüllten Zwischenraum auf. Dadurch wird beim Erhitzen des Lebensmittels eine gleichmäßige Wärmeverteilung ermöglicht, wie es beispielsweise auch in einem Wasserbad möglich ist.

Beim Kochen von Lebensmitteln bzw. Aufkochen von Wasser ist in der Regel ein besonders schnelles Aufkochen gefordert. Die zuvor beschriebenen Wasserbadtöpfe sind dafür eher ungeeignet. Neben herkömmlichen Töpfen wird in vielen Haushalten daher häufig auch ein separater Wasserkocher angeschafft. Somit wird oft eine große Zahl an Töpfen und Geräten vorgehalten, um ein optimales Erhitzen und Zubereiten verschiedener Lebensmittel zu gewährleisten.

Zudem ist oft auch die Anwendung nicht komfortabel, da die Wärmezufuhr für die jeweiligen Töpfe überwacht und häufig mehrmals angepasst werden muss. Beispielsweise wählen viele Benutzer zu Beginn des Kochvorgangs eine sehr hohe Heizleistung aus, um ein zügiges Aufheizen zu ermöglichen. Sobald die gewünschte Temperatur erreicht ist, muss der Benutzer dann aber entsprechend nachregeln, um ein Anbrennen bzw. Überkochen zu verhindern. Relevante Stand der Technik Dokumente in diesem technischen Gebiet sind bspw. DE 198 28 170 A1 und EP 2 712 526 A1.

Es ist daher die Aufgabe der vorliegenden Erfindung, ein Garsystem und ein Verfahren zum Betreiben eines Garsystems sowie einen Gargutbehälter zur Verfügung zu stellen, welche vielseitig und komfortabel zum Garen von vielerlei Gargut einsetzbar sind.

Diese Aufgabe wird gelöst durch ein Garsystem mit den Merkmalen des Anspruchs 1 und einen Gargutbehälter mit den Merkmalen des Anspruchs 14 sowie ein Verfahren mit den Merkmalen des Anspruchs 15. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Garsystem umfasst wenigstens eine Gareinrichtung mit wenigstens einer Heizquelle. Das Garsystem umfasst wenigstens einen Gargutbehälter mit wenigstens einem Zubereitungsraum zur Aufnahme und Behandlung von Gargut. Die Heizquelle ist mittels wenigstens einer Steuereinrichtung steuerbar. Dabei wird der Zubereitungsraum des Gargutbehälters von wenigstens einer Wandungseinrichtung begrenzt. Die Wandungseinrichtung umfasst wenigstens eine innere Wandung und wenigstens eine äußere Wandung. Zwischen der inneren Wandung und der äußeren Wandung ist wenigstens ein Hohlraum ausgebildet. Der Hohlraum enthält wenigstens ein Arbeitsmedium zur latenten Wärmeübertragung. Der Hohlraum und das Arbeitsmedium sind vorzugsweise dazu geeignet und ausgebildet, eine Wärmeübertragung zwischen den Wandungen im Wesentlichen über Verdampfungs- bzw. Kondensationswärme zu ermöglichen. Dem Hohlraum ist wenigstens eine Sensoreinheit zur Erfassung wenigstens einer charakteristischen Größe für einen Druck im Hohlraum zugeordnet. Die Steuereinrichtung ist dazu geeignet und ausgebildet, die Heizquelle wenigstens zeitweise in Abhängigkeit der von der Sensoreinheit erfassten Größe zu steuern.

Die charakteristische Größe für einen Druck kann bei dem Erfindungsgegenstand beispielsweise der Absolutdruck oder aber auch ein Differenzdruck sein. Der Differenzdruck wird vorzugsweise aus dem Unterschied zwischen einem ersten gemessenen Druck und wenigstens einem weiteren gemessenen Druck ermittelt, wobei der erste gemessene Druck an einem ersten diskreten Zeitpunkt erfasst wird und der wenigstens eine weitere gemessene Druck an einem anderen diskreten Zeitpunkt gemessen wird. Gemäß einer Ausführungsform der Erfindung wird der Differenzdruck durch den Unterschied der Messwerte mehrerer Drucksensoren ermittelt. Dabei können die Drucksensoren von einer Sensoreinheit oder von verschiedenen Sensoreinheiten bereitgestellt werden. Darüber hinaus kann bei der Verwendung der Messwerte mehrerer Drucksensoren zumindest einer der Drucksensoren außerhalb des Hohlraumes angeordnet sein.

Das erfindungsgemäße Garsystem bietet viele Vorteile. Ein erheblicher Vorteil ist, dass der Topf einen Hohlraum mit einem Arbeitsmedium zur latenten Wärmeübertragung umfasst. Mit einem solchen Topf können auch empfindliche Lebensmittel schonend und zügig zubereitet werden. Besonders vorteilhaft ist auch, dass durch die latente Wärmeübertragung im Hohlraum ein besonders zügiges Erhitzen bzw. Aufkochen von Speisen bzw. Wasser möglich ist. Der Gargutbehälter ist somit für unterschiedlichste Garmethoden geeignet, sodass nicht zahlreiche unterschiedliche Töpfe oder ein Wasserkocher angeschafft werden müssen.

Einen besonders erheblichen Vorteil bietet zudem die Sensoreinheit. Dadurch kann der Druck im Hohlraum zuverlässig überwacht und als Referenz für die vorherrschenden Temperaturen herangezogen werden. Somit kann die dem Gargut zugeführte Heizleistung besonders gezielt eingestellt werden. Das ist für den Benutzer sehr komfortabel, da die einzelnen Garvorgänge nicht ständig beobachtet und die Wärmezufuhr nicht ständig angepasst werden müssen. Zudem wird ein besonders zügiges Aufheizen ermöglicht, da auch zeitweise eine hohe Heizleistung kontrolliert zugeführt werden kann.

Es ist besonders bevorzugt, dass die Sensoreinheit und die Steuereinrichtung dazu geeignet und ausgebildet sind, drahtlos miteinander zu kommunizieren. Das bietet dem Benutzer einen komfortablen Umgang mit dem Garsystem, da beim Hantieren keine Kabel oder Anschlüsse im Weg sind. Insbesondere umfasst die Sensoreinheit passive Bauteile oder wird durch wenigstens ein passives Bauteil zur Verfügung gestellt. Vorzugsweise ist die Sensoreinheit dazu geeignet und ausgebildet, ein empfangenes Signal wenigstens teilweise zu reflektieren und vorzugsweise in Abhängigkeit des erfassten Drucks zu beeinflussen. Die Steuereinrichtung der Gareinrichtung umfasst dazu vorzugsweise wenigstens eine aktive Sendeeinrichtung. Die aktive Sendeeinrichtung ist dazu geeignet und ausgebildet, wenigstens ein Signal zu der Sensoreinheit zu senden und ein von der Sensoreinheit reflektiertes Signal wieder zu erfassen.

Es ist auch möglich, dass die Sensoreinheit wenigstens ein aktives Bauteil umfasst oder als ein solches ausgebildet ist. In einem solchen Fall umfasst die Sensoreinheit vorzugsweise wenigstens eine Energieversorgungseinrichtung. Dabei ist die Sensoreinheit vorzugsweise dazu geeignet und ausgebildet, unabhängig von einem Signal der Steuereinrichtung eine Kommunikation mit der Steuereinrichtung zu initiieren. Die Sensoreinheit kann wenigstens einen Energiespeicher wie eine Batterie und/oder einen Akku umfassen. Möglich ist auch, dass die Energieversorgungseinheit wenigstens teilweise mittels elektromagnetischer Induktion betreibbar und/oder der Energiespeicher mittels elektromagnetischer Induktion aufladbar ist. Das kann beispielsweise im Rahmen eines Betriebs des Gargutbehälters auf einem Induktionskochfeld erfolgen.

Die Energieversorgungseinrichtung kann dazu geeignet und ausgebildet sein, die für den Betrieb der Sensoreinheit notwendige Energie anhand von Druckänderungen im Hohlraum bereitzustellen. Dazu kann die Energieversorgungseinrichtung wenigstens einen piezoelektrischen Druckwandler aufweisen, welcher Druckveränderungen in eine elektrische Spannung umsetzt. Es ist möglich, dass die von der Energieversorgungseinrichtung bereitgestellte Energie zur Kommunikation der Sensoreinheit mit der Gareinrichtung bzw. dessen Steuereinrichtung einsetzbar ist. Es ist möglich, dass die Sensoreinheit bei einem Auftreten von Druckänderungen im Hohlraum oberhalb eines bestimmten Schwellenwertes automatisch wenigstens ein Signal an die Steuereinrichtung der Gareinrichtung sendet. Das hat den Vorteil, dass der Gargutbehälter sich beispielsweise selbst bei dem Gargerät anmelden kann, wenn dieser auf der Gareinrichtung aufgestellt und erhitzt wird.

Die Sensoreinheit umfasst vorzugsweise wenigstens einen akustischen Oberflächenwellensensor. Der Oberflächenwellensensor umfasst vorzugsweise wenigstens eine Oberflächenstruktur, welche eine akustische Oberflächenwelle (AOW) in Abhängigkeit von der zu erfassenden Größe verändert und insbesondere druckabhängig verändert. Ein Oberflächenwellensensor ermöglicht eine konstruktiv unaufwendige und kostengünstige Ausgestaltung der Sensoreinheit und bietet zudem eine zuverlässige Druckerfassung. Der Oberflächensensor kann auch dazu geeignet und ausgebildet sein, eine Veränderung der Resonanzfrequenz eines Schwingkreises zur Druckerfassung heranzuziehen.

Besonders bevorzugt ist die Sensoreinheit wenigstens teilweise in einer Griffeinrichtung des Gargutbehälters angeordnet. Die Griffeinrichtung umfasst beispielsweise einen Henkel und/oder einen Stiel. Möglich ist auch, dass die Sensoreinheit wenigstens teilweise zwischen den Wandungen des Gargutbehälters angeordnet ist. Beispielsweise kann die Sensoreinheit auch in einer Seitenwand und/oder im Boden des Gargutbehälters angeordnet sein. Es ist auch möglich, dass die Sensoreinheit in einem Deckel des Gargutbehälters angeordnet ist. Insbesondere ist die Sensoreinheit vollständig innerhalb des Gargutbehälters angeordnet. Die Sensoreinheit ist insbesondere vollständig von dem Gargutbehälter umschlossen. Solche Ausgestaltungen haben den Vorteil, dass die Sensoreinheit geschützt untergebracht ist und beim Hantieren oder Reinigen des Gargutbehälters nicht störend im Weg ist.

In allen Ausgestaltungen ist es bevorzugt, dass die Steuereinrichtung dazu geeignet und ausgebildet ist, in Abhängigkeit der erfassten Größe eine Leistung der Heizquelle einzustellen. Da der Druck im Hohlraum beispielsweise von den im Zubereitungsraum des Gargutbehälters vorherrschenden Temperaturen abhängig ist, kann die Heizleistung genau an eine erforderliche Gartemperatur angepasst werden. So kann beispielsweise verhindert werden, dass Milch überkocht oder dass bei schonenden Garvorgängen eine Maximaltemperatur überschritten wird. Weiterhin kann die Heizleistung in einer Aufheizphase besonders intensiv eingestellt werden, ohne dass der Benutzer später von Hand nachregeln muss, um ein Überkochen zu verhindern. Dies ist möglich, da die Erfindung eine homogene Wärmeverteilung ermöglicht.

In der Steuereinrichtung ist wenigstens eine funktionelle Zuordnung von Druck und Leistung hinterlegt. Diese Zuordnung von Druck und Leistung basiert insbesondere auf einem zuvor ermittelten bzw. voreingestellten Zusammenhang von Druck und Temperatur im Zubereitungsraum des Gargutbehälters bzw. eines darin befindlichen Garguts.

In einer vorteilhaften Ausgestaltung ist die Steuereinrichtung dazu geeignet und ausgebildet, wenigstens ein Automatikprogramm auszuführen. Dabei ist die Steuereinrichtung dazu geeignet und ausgebildet, die Leistung der Heizquelle in Abhängigkeit eines ausgewählten Betriebsmodus so einzustellen, dass das Gargut im Gargutbehälter bestimmte Temperatur nicht überschreitet und/oder unterschreitet. Möglich ist auch, dass die Steuereinrichtung dazu geeignet und ausgebildet ist, die Leistung der Heizquelle so einzustellen, dass das Gargut im Gargutbehälter über einen bestimmten Zeitraum definierten Temperaturen ausgesetzt wird. Dabei ist die Steuereinrichtung insbesondere dazu geeignet und ausgebildet, die von der Sensoreinheit erfasste charakteristische Größe für den Druck im Hohlraum zur Überwachung der einzuhaltenden Temperaturen heranzuziehen. Anhand der Drucküberwachung im Hohlraum kann ein solches Automatikprogramm besonders sicher und zuverlässig ausgeführt werden. Beispielsweise kann bei einer Auswahl eines Betriebsmodus "Milch aufkochen" ein Überschreiten der Siedetemperatur zuverlässig verhindert werden. Bei dem exemplarisch herangezogenen Gargut Milch bildet sich leicht ein Ansatz auf dem Topfboden, der wiederum wärmeisolierend wirkt und wodurch es schneller zum Anbrennen oder Überkochen kommt. Durch die gleichmäßige Erwärmung auch über die Topfwände wird das Anbrennen oder Überkochen verhindert. Bei empfindlichen Speisen kann darüber hinaus beispielsweise die Aufwärmgeschwindigkeit angepasst werden.

Es ist möglich und bevorzugt, dass die Steuereinrichtung dazu geeignet und ausgebildet ist, einen betriebsgemäß eingesetzten Gargutbehälter automatisch zu erkennen. Vorzugsweise ist die Steuereinrichtung dazu geeignet und ausgebildet, einen auf einer Garstelle der Gareinrichtung aufgestellten Gargutbehälter automatisch zu erkennen. Möglich ist auch, dass der Gargutbehälter erkannt wird, wenn sich dieser in der Nähe der Gareinrichtung befindet. Es kann auch eine manuelle Eingabe vorgesehen sein, welche eine automatische Erkennung aktiviert. Dabei kann vorgesehen sein, dass der Typ des Gargutbehälters und/oder die Größe des Gargutbehälters und/oder wenigstens ein anderer Parameter des Gargutbehälters automatisch erkennbar sind. Die Steuereinrichtung kann auch dazu geeignet und ausgebildet sein, zu erkennen, ob der Gargutbehälter über eine Sensoreinheit verfügt. In Abhängigkeit der Erkennung können beispielsweise bestimmte Betriebsmodi zur Auswahl stehen und/oder gesperrt werden. Beispielsweise sind bestimmte Automatikfunktionen nur dann verfügbar, wenn ein Gargutbehälter mit einer entsprechenden Sensoreinheit eingesetzt wird. Es kann auch eine manuelle Eingabe der Informationen über den eingesetzten Gargutbehälter vorgesehen sein.

Zur Erkennung durch die Steuereinrichtung umfasst der Gargutbehälter und insbesondere die Sensoreinheit vorzugsweise wenigstens eine individuelle Erkennungsstruktur, welche akustische Oberflächenwellen gezielt und reproduzierbar beeinflusst. Durch diese gezielte Veränderung erhält die Steuereinrichtung Informationen über den Gargutbehälter und dessen Eigenschaften. Die Kommunikation zwischen Sensoreinheit und Steuereinrichtung kann auch anhand einer Identifizierung mit Hilfe elektromagnetischer Wellen (RFID) geschehen. Die Sensoreinheit dient dabei insbesondere als passiver Transponder. Das ermöglicht eine besonders zuverlässige und unaufwendige Erkennung individueller Gargutbehälter durch die Steuereinrichtung. Über derartige Erkennungsmöglichkeiten können zudem zahlreiche Informationen übermittelt werden.

Besonders bevorzugt ist eine wenigstens teilweise intelligente bzw. lernfähige Ausgestaltung der Steuereinrichtung vorgesehen. Dabei ist die Steuereinrichtung dazu geeignet und ausgebildet, je nach einem vom Benutzer gewählten Betriebsmodus bestimmte Gargutbehälter vorzuschlagen. Dabei ist möglich, dass vom Benutzer verwendete Gargutbehälter registriert und bevorzugt von der Steuereinrichtung berücksichtigt werden. Möglich ist auch, dass der Benutzer Informationen über wenigstens einen Gargutbehälter in der Steuereinrichtung hinterlegen kann. Es ist auch möglich, dass sich ein neuer Gargutbehälter über die Sensoreinheit selbstständig bei der Steuereinrichtung anmeldet. Das kann beispielsweise dann geschehen, wenn der Gargutbehälter auf einer Garstelle aufgestellt wird.

Der Hohlraum erstreckt sich vorzugsweise wenigstens teilweise innerhalb eines Bodens des Gargutbehälters. Vorzugsweise erstreckt sich der Hohlraum wenigstens teilweise innerhalb wenigstens einer Seite des Gargutbehälters. Besonders bevorzugt erstreckt sich der Hohlraum sowohl innerhalb eines Bodens als auch in der Seite des Gargutbehälters. Ein solcher Topf bietet durch den entsprechend großflächigen Hohlraum einen besonders guten Wärmeübergang, sodass entsprechend kurze Aufheizzeiten möglich sind. Insbesondere ist im Boden und in einem wesentlichen Teil der Seite ein wenigstens teilweise durchgängiger Hohlraum vorgesehen. Möglich sind auch mehrere wenigstens teilweise voneinander abgetrennte Hohlräume.

Besonders bevorzugt umfasst der Gargutbehälter wenigstens einen doppelwandigen Topf oder ist als ein solcher ausgebildet. Dabei ist der zwischen den beiden Wandungen des Topfes bereitgestellte Raum vorzugsweise als Hohlraum zur latenten Wärmeübertragung ausgebildet. Möglich ist auch, dass der das Arbeitsmedium enthaltene Hohlraum sich nur über einen Teil des zwischen den beiden Wandungen bereitgestellten Raumes erstreckt. Der Gargutbehälter kann auch wenigstens eine doppelwandige Pfanne und/oder Bräter umfassen. Möglich sind auch andere Arten von doppelwandigen Gargutbehältern.

Es ist in allen Ausgestaltungen bevorzugt, dass der Hohlraum gasdicht verschlossen ist. Insbesondere ist der Hohlraum bezüglich des Arbeitsmediums und der zu erwartenden Druckbedingungen gasdicht verschlossen. Möglich ist auch, dass der Hohlraum öffenbar und verschließbar ausgebildet ist. Dadurch kann beispielsweise das Arbeitsmedium nachgefüllt und/oder ausgetauscht werden. Vorzugsweise ist ein Arbeitsmedium vorgesehen, welches hinsichtlich der vorgesehenen Temperaturen im Betrieb des Gargutbehälters einen passenden Phasenübergang zwischen einem festen und/oder flüssigen und/oder gasförmigen Zustand bietet. Besonders bevorzugt bietet das Arbeitsmedium im Temperaturbereich von Garvorgängen, wie Kochen oder Braten, eine hohe Wärmestromdichte. Als Arbeitsmedium kann Wasser oder eine wässrige Lösung vorgesehen sein. Möglich sind auch andere geeignete Arbeitsmedien. Besonders bevorzugt wird ein Arbeitsmedium eingesetzt, welches auch für einen Einsatz in einem Wärmerohr bzw. einer Heatpipe geeignet ist.

Gemäß einer bevorzugten Ausführungsform ist vorgesehen, dass das Arbeitsmedium beu Umgebungsdruck eine Flüssigkeit, insbesondere Wasser ist. das Volumen des flüssigen Arbeitsmediums ist deutlich kleiner als das Volumen des Hohlraums.

Besonders bevorzugt ist vorgesehen, dass der Hohlraum weitestgehend von Gas im Hohlraum befreit ist und der Hohlraum druckdicht verschlossen ist. Dabei ist der Unterdruck im Hohlraum so gewählt, dass das Arbeitsmedium bereits bei Raumtemperatur vollständig verdampft. Wird der Gargutbehälter nun erwärmt nimmt der Druck im Hohlraum zu, bleibt jedoch stets ein Unterdruck im Verhältnis zur Umgebung des Gargutbehälters. Hierdurch ist sichergestellt, dass bei einer Beschädigung des Gargutbehälters die Flüssigkeit nicht schlagartig aus dem Hohlraum in die Umgebung entweicht. Zugleich kann über eine Erfassung des Druckunterschiedes in dem Hohlraum sehr exakt die Temperatur im Gargutbehälter bestimmt werden.

Insbesondere weist der Hohlraum mindestens bei Wohnraumtemperatur einen Innendruck auf, der geringer als der Umgebungsdruck an einem betriebsgemäßen Aufstellort ist. Vorzugsweise ist der Innendruck im Hohlraum geringer als der normgemäße atmosphärische Druck auf Meeresspiegelhöhe. Insbesondere beträgt der Druck im Hohlraum mindestens bei Wohnraumtemperatur weniger als die Hälfte oder bevorzugt weniger als ein Viertel des Normdrucks. Im Hohlraum kann auch ein Druck von weniger als 100 mbar oder auch weniger als 1 mbar vorgesehen sein.

Es ist möglich, dass der Hohlraum evakuierbar ausgebildet ist. Dazu weist der Hohlraum vorzugsweise wenigstens ein Ventil auf. Das Ventil eignet sich insbesondere zum Anschließen einer Vakuumpumpe. Über das Ventil kann der Hohlraum vorzugsweise befüllt und/oder entleert werden. Möglich ist auch, dass der Hohlraum dauerhaft fest verschlossen und insbesondere gasdicht verschlossen ist. Es ist möglich, dass der Hohlraum nicht zerstörungsfrei öffenbar ist.

Im Hohlraum kann wenigstens eine Stützeinrichtung und/oder wenigstens eine Verstrebung oder dergleichen zur Stabilisierung der Wandungen vorgesehen sein. Eine solche Stabilisierung ist besonders bei geringen Drücken im Hohlraum von Vorteil.

Es ist möglich, dass dem Hohlraum wenigstens ein Sicherheitsventil zugeordnet ist. Ein solches Sicherheitsventil ist insbesondere dann vorgesehen, wenn Wasser als Arbeitsmedium eingesetzt wird und/oder wenn das Arbeitsmedium nachfüllbar ausgestaltet ist. Das Sicherheitsventil ist insbesondere dazu geeignet und ausgebildet, bei Erreichen eines bestimmten Drucks im Hohlraum zu öffnen. Dadurch kann ein zu hoher Druck im Hohlraum zuverlässig vermieden werden.

In einer besonders vorteilhaften Ausgestaltung umfasst die Gareinrichtung wenigstens eine durch die Heizquelle beheizbare Garstelle, auf welcher der Gargutbehälter abstellbar ist. Beispielsweise bieten die in Haushaltsküchen vorgesehenen Kochfelder in der Regel solche Garstellen. Hier ist das erfindungsgemäße Garsystem besonders vorteilhaft einsetzbar, da nach Belieben ein Gargutbehälter auf die Garstelle aufgesetzt werden kann. Der Gargutbehälter ist dabei besonders bevorzugt nicht fest mit der Gareinrichtung verbunden.

Die Garstelle ist vorzugsweise auf einem Kochfeld angeordnet. Das Kochfeld umfasst insbesondere eine Mehrzahl von Garstellen. Es ist möglich, dass die Garstelle einer festen Position auf dem Kochfeld zugeordnet ist. Möglich ist auch, dass die Garstelle dynamisch einer Position auf dem Kochfeld zuordenbar ist. Beispielsweise kann die Garstelle durch den Aufstellort des Gargutbehälters festgelegt werden. Dabei werden insbesondere die Heizquellen betrieben, welche sich im Bereich der gewählten Garstelle befinden.

Der erfindungsgemäße Gargutbehälter ist insbesondere dazu geeignet und ausgebildet, in dem zuvor beschriebenen Garsystem verwendet zu werden. Der Gargutbehälter umfasst wenigstens einen Zubereitungsraum zur Aufnahme und Behandlung von Gargut. Dabei ist der Zubereitungsraum des Gargutbehälters von wenigstens einer Wandungseinrichtung begrenzt. Die Wandungseinrichtung umfasst wenigstens eine innere Wandung und wenigstens eine äußere Wandung. Zwischen der inneren Wandung und der äußeren Wandung ist wenigstens ein Hohlraum ausgebildet. Der Hohlraum umfasst wenigstens ein Arbeitsmedium zur latenten Wärmeübertragung. Dadurch erfolgt die Wärmeübertragung zwischen den Wandungen im Wesentlichen über Verdampfungs- bzw. Kondensationswärme des Arbeitsmediums. Im Hohlraum ist wenigstens eine Sensoreinheit zur Erfassung wenigstens einer charakteristischen Größe für einen Druck im Hohlraum zugeordnet. Die Sensoreinheit ist dazu geeignet und ausgebildet, die erfasste Größe an eine Steuereinrichtung einer Gareinrichtung zu übermitteln.

Dadurch kann in Abhängigkeit des erfassten Drucks eine Steuerung der Gareinrichtung erfolgen.

Der erfindungsgemäße Gargutbehälter bietet ebenfalls viele Vorteile. Mit dem erfindungsgemäßen Gargutbehälter können empfindliche Speisen besonders schonend zubereitet werden. Zugleich bietet der Gargutbehälter aber auch die Möglichkeit, Speisen oder Wasser besonders schnell aufheizen zu können. Der Gargutbehälter weist somit einen besonders breiten Anwendungsbereich auf und ersetzt zahlreiche andere Töpfe oder auch einen Wasserkocher im Haushalt. Besonders vorteilhaft ist auch, dass der Gargutbehälter mit einer Gareinrichtung gekoppelt werden kann. Die Gareinrichtung kann dann unter Berücksichtigung der von der Sensoreinheit erfassten Daten gesteuert werden. Dadurch kann mit dem Gargutbehälter eine für die Zubereitung gewünschte Temperatur genau eingehalten werden.

Das erfindungsgemäße Verfahren dient zum Betreiben eines Garsystems und vorzugsweise des zuvor beschriebenen Garsystems. Das Garsystem umfasst wenigstens eine Gareinrichtung mit wenigstens einer Heizquelle. Das Garsystem umfasst wenigstens einen Gargutbehälter mit wenigstens einem Zubereitungsraum zur Aufnahme und Behandlung von Gargut. Die Heizquelle wird mittels wenigstens einer Steuereinrichtung gesteuert. Dabei ist der Zubereitungsraum des Gargutbehälters von wenigstens einer Wandungseinrichtung begrenzt. Die Wandungseinrichtung umfasst wenigstens eine innere Wandung und wenigstens eine äußere Wandung. Zwischen der inneren Wandung und der äußeren Wandung ist wenigstens ein Hohlraum ausgebildet. In dem Hohlraum erfolgt mittels wenigstens eines Arbeitsmediums eine gezielt latente Wärmeübertragung. Dabei wird wenigstens eine charakteristische Größe für einen Druck im Hohlraum erfasst. Die erfasste Größe wird der Steuereinrichtung zur Verfügung gestellt. Die Heizquelle wird wenigstens zeitweise in Abhängigkeit der erfassten Größe durch die Steuereinrichtung gesteuert.

Auch das erfindungsgemäße Verfahren bietet die zuvor beschriebenen Vorteile.

Im Rahmen der vorliegenden Erfindung umfasst der Begriff Steuern vorzugsweise sowohl Regelvorgänge als auch Steuervorgänge. Die Steuereinrichtung ist vorzugsweise auch dazu geeignet und ausgebildet, die Heizquelle wenigstens zeitweise in Abhängigkeit wenigstens einer charakteristischen Größe für Temperaturen zu steuern. Dazu ist vorzugsweise wenigstens eine Sensoreinrichtung zur Erfassung wenigstens einer charakteristischen Größe für Temperaturen vorgesehen. Die Sensoreinrichtung umfasst vorzugsweise einen oder mehrere Temperatursensoren.

Als Heizquelle ist insbesondere eine elektrische Induktionseinrichtung mit einer Mehrzahl von Induktoren vorgesehen. Möglich ist auch, dass die Heizquelle wenigstens eine elektrische Widerstandsheizquelle umfasst. Die Heizquelle kann auch eine Gasheizquelle und/oder eine Infrarotheizquelle umfassen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung einer Küchenzeile mit einem erfindungsgemäßen Garsystem in einer perspektivischen Ansicht; und
- Figur 2: eine stark schematische Darstellung eines Garsystems in einer geschnittenen Seitenansicht.

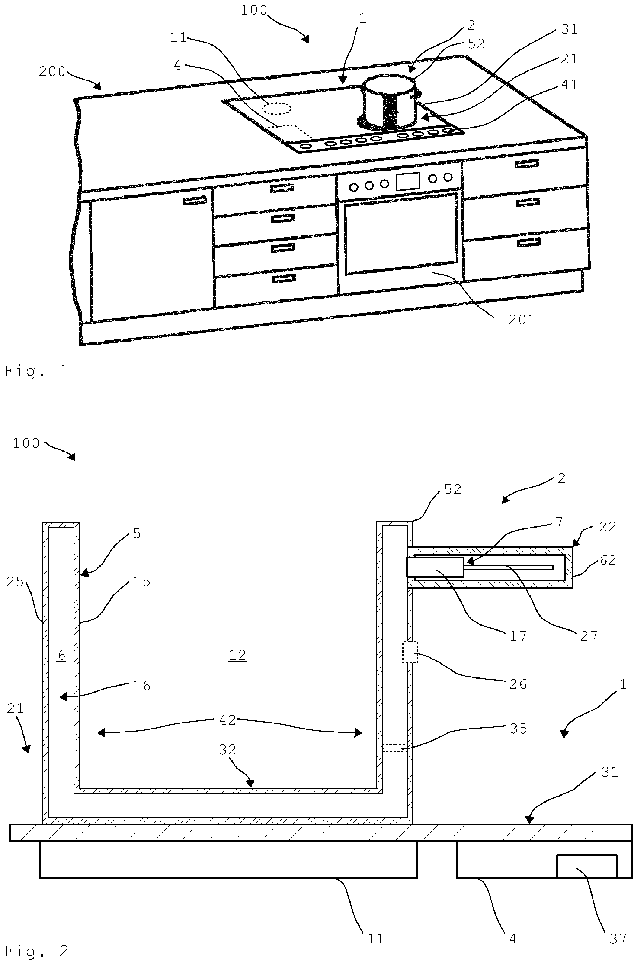

In der Figur 1 ist ein erfindungsgemäßes Garsystem 100 rein schematisch in einer perspektivischen Ansicht dargestellt. Das Garsystem 100 wird hier nach dem erfindungsgemäßen Verfahren betrieben. Dabei umfasst das Garsystem 100 in der hier gezeigten Ausführung eine als Kochfeld 31 ausgebildete Gareinrichtung 1 und einen als Topf 52 ausgebildeten Gargutbehälter 2. Die Gareinrichtung 1 ist hier in eine Arbeitsplatte einer Küchenzeile 200 eingelassen. Unterhalb des Kochfeldes 31 ist hier ein Backofen 201 angeordnet. Das Kochfeld 31 und der Backofen 201 sind hier als Einbaugerät ausgebildet. Möglich ist aber auch, dass diese als ein alleinstehendes Gargerät und beispielsweise als ein Herd ausgebildet sind.

Das Kochfeld 31 umfasst hier eine Mehrzahl von beheizbaren Garstellen 21, auf denen verschiedene Gargutbehälter 2 abgestellt werden können. Zur Beheizung ist jeder Garstelle 21 wenigstens eine Heizquelle 11 zugeordnet. Zur besseren Übersichtlichkeit ist hier nur eine Heizquelle 11 stark schematisch eingezeichnet.

Das Kochfeld 31 ist hier als Induktionskochfeld ausgeführt und umfasst eine Vielzahl von Induktoren als Heizquellen 11. Dabei können einer Garstelle 21 ein oder mehrere Induktoren zugeordnet sein. Es ist möglich, dass eine feste Anzahl vorbestimmter Induktoren jeweils zu einer Garstelle 21 gehört. Möglich ist aber auch, dass sich die Anzahl und die Lage der jeweiligen zu einer Garstelle 21 gehörenden Induktoren bzw. Heizquellen 11 aus dem jeweiligen Betrieb ergeben und insbesondere von der Geometrie der eingesetzten Gargutbehälter 2 abhängen. Es können aber auch andere Arten von Heizquellen 11 vorgesehen sein, wie zum Beispiel elektrische Widerstandsheizquellen und/oder Gasheizquellen und/oder Infrarot Heizquellen.

Die Gareinrichtung 1 ist hier als ein autarkes Kochfeld 31 mit einer eigenen Bedieneinrichtung 41 und Steuereinrichtung 4 ausgebildet. Möglich ist aber auch, dass das Kochfeld 31 über eine Bedieneinrichtung eines Gargerätes bzw. Herdes bedienbar ist. Die Bedieneinrichtung 41 umfasst vorzugsweise mehrere Bedienelemente zur Vornahme von Einstellungen. Die Bedieneinrichtung 41 kann auch ein Display und/oder eine berührungsempfindliche Oberfläche bzw. Touchscreen umfassen. Das Kochfeld 31 verfügt hier über verschiedene Automatikfunktionen bzw. Automatikprogramme, welche in der Steuereinrichtung 4 hinterlegt sind.

Der Gargutbehälter 2 umfasst zudem eine Wandungseinrichtung 5 und einen Hohlraum 6 und eine Sensoreinheit 7, welche hier nicht eingezeichnet sind und mit Bezug zu der nachfolgenden Figur näher beschrieben werden.

Die Figur 2 zeigt ein stark schematisiertes Garsystem 100 mit einer Gareinrichtung 1 und einem Gargutbehälter 2 in einer geschnittenen Seitenansicht. Die Gareinrichtung 1 wird durch ein Kochfeld 31 zur Verfügung gestellt. Der Gargutbehälter 2 ist hier als ein doppelwandiger Topf 52 ausgebildet, welcher auf einer Garstelle 21 des Kochfeldes 31 aufgestellt ist. Unterhalb des Topfes 52 befindet sich eine Heizquelle 11. Die Heizquelle 11 ist mit einer Steuereinrichtung 4 wirkverbunden, sodass eine Steuerung bzw. Regelung der Heizleistung durch die Steuereinrichtung 4 erfolgen kann. Dabei berücksichtigt die Steuereinrichtung 4 unter anderem mehrere von einer Sensoreinrichtung 37 zur Verfügung gestellte Temperaturwerte. Die Sensoreinrichtung 37 verfügt dabei über hier nicht dargestellte - und/oder Drucksensoren.

Der Topf 52 weist hier einen Zubereitungsraum 12 zur Aufnahme und Zubereitung von Gargut auf. Der Zubereitungsraum 12 wird durch eine Wandungseinrichtung 5 begrenzt, welche eine innere Wandung 15 und eine damit verbundene äußere Wandung 25 aufweist. Die Wandungen 15, 25 sind beabstandet zueinander angeordnet, sodass sich zwischen ihnen ein Hohlraum 6 ergibt.

Der Hohlraum 6 erstreckt sich hier sowohl im Boden 32 als auch an der Seite 42 des Topfes 52. Die doppellagige Anordnung der Wandungen 15, 25 erstreckt sich somit im Wesentlichen über den gesamten Topf 52. Möglich ist aber auch, dass nur an den Seiten 42 oder am Boden 32 eine doppellagige Anordnung der Wandungen 15, 25 vorgesehen ist. Der Boden 32 kann auch wenigstens abschnittsweise massiv ausgeführt sein. Das bietet beispielsweise in einem Induktionsbetrieb Vorteile. Der Topf 52 verfügt hier über eine als Henkel 62 ausgebildete Griffeinrichtung 22. Der Topf 52 kann auch zwei solcher Griffeinrichtungen 22 aufweisen.

Der Hohlraum 6 ist hier mit einem Arbeitsmedium 16 teilweise gefüllt. Im Hohlraum 6 kann an den Wandungen 15, 25 auch wenigstens abschnittsweise eine als Arbeitsmedium 16 dienende Beschichtung aufgetragen sein. Der Hohlraum 6 ist hier gasdicht verschlossen und weist gegenüber der betriebsgemäßen Umgebung des Garsystems 100 einen Unterdruck auf. Dabei sind der Unterdruck und das Arbeitsmedium 16 aufeinander abgestimmt, sodass bei den zu erwartenden Temperaturbedingungen im Hohlraum 6 ein Phasenwechsel des Arbeitsmediums 16 begünstigt wird. Das ermöglicht eine besonders vorteilhafte Wärmeübertragung zwischen den Wandungen 15, 25.

Die Wärmeübertragung im Hohlraum erfolgt im Wesentlichen über Verdampfungs- bzw. Kondensationswärme des Arbeitsmediums 16. Dadurch weist der Topf 52 einen besonders geringen Wärmewiderstand auf. So kann eine lokal erzeugte Erwärmung, beispielsweise am Boden 32, besonders effektiv zu anderen Bereichen des Topfes 52 übertragen werden. Dadurch kann der Topf 52 über den gesamten Zubereitungsraum 12 besonders gleichmäßig erwärmt werden.

Oft führt eine zügige Erwärmung bestimmter Speisen, wie Schokolade oder Saucen, zu einem unerwünschten Anbrennen. Durch die besonders gleichmäßige Wärmeverteilung und den sehr geringen Wärmewiderstand des hier gezeigten Gargutbehälters 2 können solche Speisen ohne Anbrennen besonders zügig erwärmt werden. Zudem ist aufgrund des geringen Wärmewiderstands auch ein besonders intensives und somit schnelles Aufheizen von beispielsweise Wasser möglich. Der hier vorgestellte Gargutbehälter 2 ist somit besonders vielseitig einsetzbar, sodass ein Einsatz von Simmertöpfen oder Wasserkochern nicht mehr nötig ist.

Der Hohlraum 6 kann werksseitig mit einem Arbeitsmedium 16 gefüllt und fest verschlossen sein. Möglich ist aber auch, dass das Arbeitsmedium 16 nachgefüllt oder ausgetauscht werden kann. Dazu kann der Topf 52 in einer Ausgestaltung wenigstens ein Sicherheitsventil 26 umfassen. Über dieses Ventil kann zum einen das Arbeitsmedium 16 in den Hohlraum eingebracht werden. Zum anderen kann der Hohlraum 6 über das Sicherheitsventil 26 evakuiert werden. Dadurch kann ein gezielter Unterdruck im Hohlraum 6 aufgebaut werden. Zudem dient das Sicherheitsventil 26 dazu, bei einem bestimmten Druck im Hohlraum 6 zu öffnen und den Druck zu reduzieren.

Beispielsweise wird in den Hohlraum 6 Wasser als Arbeitsmedium 16 eingefüllt. Anschließend wird die verbleibende Luft im Hohlraum 6 abgepumpt. Es kann ein Druck von kleiner 100 mbar und vorzugsweise kleiner 50 mbar und beispielsweise 22 mbar oder weniger aufgebaut werden. Beispielsweise beginnt das Wasser ab einem Druck von 22 mbar im Hohlraum 6 zu sieden, sodass sich im Hohlraum 6 ein Nassdampfgebiet aufbaut. Ein solches System bietet einen sehr geringen Wärmewiderstand. Da durch das Evakuieren des Topfes 52 fast nur noch Dampf im Hohlraum 6 vorhanden ist, muss im Gegensatz zu einem Wasserbad bzw. Simmertopf weniger zusätzliche Masse erwärmt werden.

Vorzugsweise sind die Menge an Wasser und der Druck derart aufeinander abgestimmt, dass das gesamte Wasser im Hohlraum 6 verdampft.

Es ist möglich, dass zwischen den Wandungen 15, 25 Streben 35 ausgebildet sind. Diese Streben stützen die Wandungen 15, 25 gegeneinander ab und ermöglichen, dass auch große Druckunterschiede zwischen der Umgebung und im Hohlraum 6 ohne Kollabieren möglich sind. Vorzugsweise sind die Streben 35 dabei so angeordnet, dass diese den Hohlraum 6 nicht vollständig unterteilen. Dadurch wird ein effektiver Wärmetransport durch das Arbeitsmedium 16 auch bei Verwendung von Streben 35 nicht unterbrochen.

Dem Hohlraum 6 ist hier eine Sensoreinheit 7 zur Erfassung einer charakteristischen Größe für einen Druck im Hohlraum 6 zugeordnet. Die Sensoreinheit 7 umfasst hier einen Oberflächenwellensensor 17 und eine damit verbundene Antenne 27. Es können auch andere Arten von Drucksensoren für die Sensoreinheit 7 vorgesehen sein. Über die Antenne 27 ist die Sensoreinheit 7 mit der Steuereinrichtung 4 der Gareinrichtung 1 drahtlos verbunden. Dazu kann die Steuereinrichtung 4 eine Sendeeinrichtung mit einer Antenne aufweisen.

Im Betrieb sendet die Steuereinrichtung 4 ein Signal zu der Sensoreinheit 7, welches den akustischen Oberflächenwellensensor 17 durchläuft und wieder zur Steuereinrichtung 4 reflektiert wird. Dabei wird das von der Steuereinrichtung 4 ausgesendete Signal im Oberflächenwellensensor 17 in eine akustische Oberflächenwelle umgesetzt und in Abhängigkeit des anliegenden Drucks verändert. Diese Veränderung wird von der Steuereinrichtung 4 registriert und zur Erfassung des Drucks im Hohlraum 6 herangezogen.

Die Sensoreinheit 7 ist vorzugsweise auch dazu in der Lage, das von der Steuereinrichtung 4 empfangene Signal so zu verändern, dass neben dem Druck auch weitere Informationen übermittelt werden können. Beispielsweise kann dadurch der Steuereinrichtung 4 mitgeteilt werden, um welche Art Gargutbehälter 2 es sich handelt. Beispielsweise können Informationen über die Größe, die Form, den Bodendurchmesser, das Material und/oder andere Eigenschaften des Gargutbehälters 2 übermittelt werden.

Der akustische Oberflächenwellensensor 17 bietet dabei den Vorteil, dass keine eigene Energieversorgung der Sensoreinheit 7 notwendig ist. Die zum Betrieb notwendige Energie wird durch das von der Steuereinrichtung 4 ausgesendete Signal zur Verfügung gestellt. Dadurch ist die Sensoreinheit 7 praktisch wartungsfrei und kann entsprechend fest integriert in dem Topf 52 untergebracht werden.

Möglich ist auch, dass die Sensoreinheit 7 eine hier nicht dargestellte Energieversorgungseinrichtung umfasst, welche durch Druckänderungen im Hohlraum 6 gespeist wird und die Sensoreinheit 7 mit elektrischer Energie versorgt. Das hat den Vorteil, dass auch der Gargutbehälter 2 selbst Signale zu der Steuereinrichtung 4 senden kann, ohne dass die Steuereinrichtung 4 zuvor ein entsprechendes Signal ausgesendet hat. Dann kann sich der Topf beispielsweise selbst bei der Steuereinrichtung 4 registrieren, sobald er verwendet wird.

Zur Erfassung des Drucks steht der Oberflächenwellensensor 17 hier mit dem Hohlraum 6 in Verbindung. Der größte Teil des Oberflächenwellensensors 17 sowie die Antenne 27 sind jedoch in der Griffeinrichtung 22 untergebracht. Das hat den Vorteil, dass die Sensoreinheit 17 einerseits sicher aufgenommen ist und zudem der Wärmefluss im Hohlraum 6 nicht durch die Sensoreinheit 17 gestört wird. Die Antenne 27 ist insbesondere in einer nichtmetallischen Griffeinrichtung untergebracht.

Der von der Sensoreinheit 7 erfasste Druck im Hohlraum 6 wird hier als Referenz für die Temperaturen im Zubereitungsraum 12 bzw. an den Wandungen 15, 25 herangezogen. Dadurch kann in Kenntnis des Drucks im Hohlraum 6 eine Einstellung der Heizleistung in Abhängigkeit der jeweils vorliegenden Temperatur erfolgen.

In Abhängigkeit des übermittelten Drucks stellt die Steuereinrichtung 4 die Leistung der Heizquelle 11 derjenigen Garstelle 21 ein, auf welcher der Gargutbehälter 2 aufgestellt ist. Dabei kann die Steuereinrichtung 4 ein Automatikprogramm ausführen, welches für den vom Benutzer gewünschten Betriebsmodus geeignet und angepasst ist. Je nachdem, welche Voreinstellungen der Benutzer ausgewählt hat, kann so die Heizleistung entsprechend geregelt bzw. gesteuert werden.

Beispielsweise wählt der Benutzer über die Bedieneinrichtung 41 ein Automatikprogramm aus, welches für das Aufkochen von Milch vorgesehen ist. Die Steuereinrichtung 4 regelt den hierfür optimalen Prozess hinsichtlich Leistung, maximaler Temperatur und/oder Aufwärmgeschwindigkeit dann anschließend anhand des von der Sensoreinheit 7 erfassten Drucks. Dadurch ist ein besonders komfortables und schnelles Erwärmen bzw. Aufkochen von diversen Lebensmitteln, wie z. B. Milch, Saucen, Schokolade und/oder Wasser, möglich. Aufgrund der Drucküberwachung und der damit verbundenen Kenntnis der jeweils vorliegenden Temperaturen im Zubereitungsraum 12 kann ein schonendes und zugleich zügiges Erwärmen erfolgen, ohne dass es zu einem unerwünschten Anbrennen oder Überkochen kommt.

### Bezugszeichenliste

- 1: Gareinrichtung
- 2: Gargutbehälter
- 4: Steuereinrichtung
- 5: Wandungseinrichtung
- 6: Hohlraum
- 7: Sensoreinheit
- 11: Heizquelle
- 12: Zubereitungsraum
- 15: Wandung
- 16: Arbeitsmedium
- 17: Oberflächenwellensensor
- 21: Garstelle
- 22: Griffeinrichtung
- 25: Wandung
- 26: Sicherheitsventil
- 27: Antenne
- 31: Kochfeld
- 32: Boden
- 35: Strebe
- 37: Sensoreinrichtung
- 41: Bedieneinrichtung
- 42: Seite
- 52: Topf
- 62: Henkel
- 100: Garsystem
- 200: Küchenzeile
- 201: Backofen

## Patentansprüche

1. Gargutbehälter (2) mit wenigstens einem Zubereitungsraum (12) zur Aufnahme und Behandlung von Gargut,
**dadurch gekennzeichnet, dass**
der Zubereitungsraum (12) des Gargutbehälters (2) von wenigstens einer Wandungseinrichtung (5) begrenzt ist, welche wenigstens eine innere Wandung (15) und wenigstens eine äußere Wandung (25) aufweist und dass zwischen der inneren Wandung (15) und der äußeren Wandung (25) wenigstens ein Hohlraum (6) ausgebildet ist, welcher wenigstens ein Arbeitsmedium (16) zur latenten Wärmeübertragung enthält, sodass die Wärmeübertragung zwischen den Wandungen (15, 25) im Wesentlichen über Verdampfungs- bzw. Kondensationswärme des Arbeitsmediums (16) erfolgt und
dem Hohlraum (6) wenigstens eine Sensoreinheit (7) zur Erfassung wenigstens einer charakteristischen Größe für einen Druck im Hohlraum (6) zugeordnet ist und dass die Sensoreinheit (7) dazu geeignet und ausgebildet ist, die erfasste Größe an eine Steuereinrichtung (4) einer Gareinrichtung (1) zu übermitteln, sodass in Abhängigkeit des erfassten Drucks eine Steuerung der Gareinrichtung (1) erfolgen kann und
dem Hohlraum (6) wenigstens ein Sicherheitsventil (26) zugeordnet ist.

2. Gargutbehälter (2) nach Anspruch 1, **dadurch gekennzeichnet, dass** die Sensoreinheit (7) wenigstens einen akustischen Oberflächenwellensensor (17) umfasst.

3. Gargutbehälter (2) nach einem der vorhergehenden Ansprüche, **dadurch gekennzeichnet, dass** die Sensoreinheit (7) wenigstens teilweise in einer Griffeinrichtung (22) des Gargutbehälters (2) angeordnet ist.

4. Gargutbehälter (2) nach einem der vorhergehenden Ansprüche, **dadurch gekennzeichnet, dass** der Hohlraum (6) sich wenigstens teilweise innerhalb eines Bodens (32) und/oder innerhalb wenigstens einer Seite (42) des Gargutbehälters (2) erstreckt.

5. Gargutbehälter (2) nach einem der vorhergehenden Ansprüche, **dadurch gekennzeichnet, dass** der Gargutbehälter (2) wenigstens einen doppelwandigen Topf (52) umfasst.

6. Gargutbehälter (2) nach einem der vorhergehenden Ansprüche, **dadurch gekennzeichnet, dass** der Hohlraum (6) gasdicht verschlossen ist.

7. Gargutbehälter (2) nach einem der vorhergehenden Ansprüche, **dadurch gekennzeichnet, dass** der Hohlraum (6) mindestens bei Wohnraumtemperatur einen Innendruck aufweist, der geringer als der Umgebungsdruck ist.

8. Garsystem (100) mit wenigstens einer wenigstens eine Heizquelle (11) umfassenden Gareinrichtung (1) und mit wenigstens einem Gargutbehälter (2) nach einem der Ansprüche 1 bis 7, wobei die Heizquelle (11) mittels wenigstens einer Steuereinrichtung (4) steuerbar ist,
**dadurch gekennzeichnet, dass**
die Steuereinrichtung (4) dazu geeignet und ausgebildet ist,
die Heizquelle (11) wenigstens zeitweise in Abhängigkeit der von der Sensoreinheit (7) erfassten Größe zu steuern und
einen betriebsgemäß eingesetzten Gargutbehälter (2) automatisch zu erkennen.

9. Garsystem (100) nach dem vorhergehenden Anspruch, **dadurch gekennzeichnet, dass** die Sensoreinheit (7) und die Steuereinrichtung (4) dazu geeignet und ausgebildet sind, drahtlos miteinander zu kommunizieren.

10. Garsystem (100) nach einem der vorhergehenden Ansprüche, **dadurch gekennzeichnet, dass** die Steuereinrichtung (4) dazu geeignet und ausgebildet ist, in Abhängigkeit der erfassten Größe eine Leistung der Heizquelle (11) einzustellen.

11. Garsystem (100) nach einem der vorhergehenden Ansprüche, **dadurch gekennzeichnet, dass** die Steuereinrichtung (4) dazu geeignet und ausgebildet ist, wenigstens ein Automatikprogramm auszuführen, bei welchem die Leistung der Heizquelle (11) in Abhängigkeit eines ausgewählten Betriebsmodus so eingestellt wird, dass das Gargut im Gargutbehälter (2) bestimmte Temperaturen nicht überschreitet und/oder unterschreitet und/oder dass das Gargut im Gargutbehälter (2) über einen bestimmten Zeitraum definierten Temperaturen ausgesetzt wird.

12. Garsystem (100) nach einem der vorhergehenden Ansprüche, **dadurch gekennzeichnet, dass** die Gareinrichtung (1) wenigstens eine durch die Heizquelle (11) beheizbare Garstelle (21) umfasst, auf welcher der Gargutbehälter (2) abstellbar ist.

13. Verfahren zum Betreiben eines Garsystems (100) welches gemäß eines der Ansprüche 8 bis 12 ausgebildet ist, wobei die Heizquelle (11) mittels wenigstens einer Steuereinrichtung (4) gesteuert wird,
**dadurch gekennzeichnet, dass**
ein betriebsgemäß eingesetzter Gargutbehälter (2) automatisch erkannt wird und in dem Hohlraum (6) des Gargutbehälters (2) mittels des wenigstens einen Arbeitsmediums (16) eine gezielt latente Wärmeübertragung erfolgt und wenigstens eine charakteristische Größe für einen Druck im Hohlraum (6) erfasst und der Steuereinrichtung (4) zur Verfügung gestellt wird und
die Heizquelle (11) wenigstens zeitweise in Abhängigkeit der erfassten Größe durch die Steuereinrichtung (4) gesteuert wird.

## Claims

1. Container for food to be cooked (2) having at least one preparation space (12) for receiving and treating food to be cooked, **characterised in that** the preparation space (12) of the container for food to be cooked (2) is defined by at least one wall device (5), which has at least one inner wall (15) and at least one outer wall (25), and that at least one hollow space (6) is formed between the inner wall (15) and the outer wall (25), which contains at least one working medium (16) for latent heat transfer, so that the heat transfer between the walls (15, 25) substantially takes place through vaporisation or condensation heat from the working medium (16) and at least one sensor unit (7) for detecting at least one characteristic value for a pressure in the hollow space (6) is assigned to the hollow space (6) and that the sensor unit (7) is suitable and designed for transmitting the detected value to a control device (4) of a cooking device (1), so that controlling of the cooking device (1) can take place as a function of the detected pressure and at least one safety valve (26) is assigned to the hollow space (6).

2. Container for food to be cooked (2) according to claim 1, **characterised in that** the sensor unit (7) comprises at least one surface acoustic wave sensor (17).

3. Container for food to be cooked (2) according to any of the preceding claims, **characterised in that** the sensor unit (7) is at least partially disposed in a gripping device (22) of the container for food to be cooked (2).

4. Container for food to be cooked (2) according to any of the preceding claims, **characterised in that** the hollow space (6) extends at least partially within a bottom (32) and/or within at least one side (42) of the container for food to be cooked (2).

5. Container for food to be cooked (2) according to any of the preceding claims, **characterised in that** the container for food to be cooked (2) comprises at least one double-walled pot (52).

6. Container for food to be cooked (2) according to any of the preceding claims, **characterised in that** the hollow space (6) is sealed in a gas-tight manner.

7. Container for food to be cooked (2) according to any of the preceding claims, **characterised in that** the hollow space (6) has at least at living-room temperature an internal pressure which is lower than the ambient pressure.

8. Cooking system (100) having at least one cooking device (1) comprising at least one heat source (11) and having at least one container for food to be cooked (2) according to any of the claims 1 to 7, wherein the heat source (11) is controllable by means of at least one control device (4), **characterised in that** the control device (4) is suitable and designed to control the heat source (11) at least temporarily as a function of the value detected by the sensor unit (7) and to automatically recognise an operatively used container for food to be cooked (2).

9. Cooking system (100) according to the preceding claim, **characterised in that** the sensor unit (7) and the control device (4) are suitable and designed to wirelessly communicate with each other.

10. Cooking system (100) according to any of the preceding claims, **characterised in that** the control device (4) is suitable and designed to set a power of the heat source (11) as a function of the detected value.

11. Cooking system (100) according to any of the preceding claims, **characterised in that** the control device (4) is suitable and designed to execute at least one automatic program in which the power of the heat source (11) is set as a function of a selected operating mode in such a manner that the food to be cooked in the container for food to be cooked (2) does not exceed and/or falls below certain temperatures and/or that the food to be cooked in the container for food to be cooked (2) is exposed to defined temperatures over a certain period of time.

12. Cooking system (100) according to any of the preceding claims, **characterised in that** the cooking device (1) comprises at least one cooking-station (21) heatable by the heat source (11), on which the container for food to be cooked (2) can be placed.

13. Method for operating a cooking system (100) which is designed according to any of the claims 8 to 12, wherein the heat source (11) is controlled by means of at least one control device (4), **characterised in that** an operatively used container for food to be cooked (2) is automatically detected and a targeted latent heat transfer takes place in the hollow space (6) of the container for food to be cooked (2) by means of the at least one working medium (16), and at least one characteristic value for a pressure in the hollow space (6) is detected and provided to the control device (4), and the heat source (11) is controlled by the control device (4) at least temporarily as a function of the detected value.

## Revendications

1. Récipient de produit à cuire (2), comportant au moins un espace de préparation (12) pour recevoir et traiter des produits à cuire, **caractérisé en ce que** l'espace de préparation (12) du récipient de produit à cuire (2) est délimité par au moins un moyen formant paroi (5) qui présente au moins une paroi intérieure (15) et au moins une paroi extérieure (25), et **en ce qu'**au moins une cavité (6) est formée entre la paroi intérieure (15) et la paroi extérieure (25), laquelle cavité contient au moins un fluide de travail (16) pour le transfert de chaleur latent, de sorte que le transfert de chaleur entre les parois (15, 25) se fait essentiellement par évaporation ou par condensation de la chaleur du fluide de travail (16), et que la cavité (6) est associée à au moins une unité de capteur (7) pour détecter au moins une grandeur caractéristique pour une pression dans la cavité (6), et **en ce que** l'unité de capteur (7) est adaptée et conçue pour transmettre la grandeur détectée à un dispositif de commande (4) d'un dispositif de cuisson (1), de sorte que le dispositif de cuisson (1) peut être commandé en fonction de la pression détectée, et qu'au moins une soupape de sécurité (26) est associée à la cavité (6).

2. Récipient de produit à cuire (2) selon la revendication 1, **caractérisé en ce que** l'unité de capteur (7) comprend au moins un capteur de type acoustique à ondes de surface (17).

3. Récipient de produit à cuire (2) selon l'une des revendications précédentes, **caractérisé en ce que** l'unité de capteur (7) est au moins partiellement disposée dans un dispositif de préhension (22) du récipient de produit à cuire (2).

4. Récipient de produit à cuire (2) selon l'une des revendications précédentes, **caractérisé en ce que** la cavité (6) s'étend au moins partiellement à l'intérieur d'un fond (32) et/ou à l'intérieur d'au moins un côté (42) du récipient de produit à cuire (2).

5. Récipient de produit à cuire (2) selon l'une des revendications précédentes, **caractérisé en ce que** le récipient de produit à cuire (2) comprend au moins une casserole à double paroi (52).

6. Récipient de produit à cuire (2) selon l'une des revendications précédentes, **caractérisé en ce que** la cavité (6) est fermée de manière étanche aux gaz.

7. Récipient de produit à cuire (2) selon l'une des revendications précédentes, **caractérisé en ce que** la cavité (6) présente au moins à température ambiante une pression interne inférieure à la pression ambiante.

8. Système de cuisson (100) comportant au moins un dispositif de cuisson (1) comprenant au moins une source de chauffage (11) et comportant au moins un récipient de produit à cuire (2) selon l'une des revendications 1 à 7, la source de chauffage (11) pouvant être commandée au moyen d'au moins un dispositif de commande (4), **caractérisé en ce que** le dispositif de commande (4) est adapté et conçu pour commander la source de chauffage (11) au moins temporairement en fonction de la grandeur détectée par l'unité de capteur (7), et pour détecter automatiquement un récipient de produit à cuire (2) utilisé de manière fonctionnelle.

9. Système de cuisson (100) selon la revendication précédente, **caractérisé en ce que** l'unité de capteur (7) et le dispositif de commande (4) sont adaptés et conçus pour communiquer ensemble sans fil.

10. Système de cuisson (100) selon l'une des revendications précédentes, **caractérisé en ce que** le dispositif de commande (4) est adapté et conçu pour régler une puissance de la source de chauffage (11) en fonction de la grandeur détectée.

11. Système de cuisson (100) selon l'une des revendications précédentes, **caractérisé en ce que** le dispositif de commande (4) est adapté et conçu pour exécuter au moins un programme automatique dans lequel la puissance de la source de chauffage (11) est réglée en fonction d'un mode de fonctionnement sélectionné, de sorte que le produit à cuire dans le récipient de produit à cuire (2) ne dépasse pas et/ou ne tombe pas en dessous de certaines températures, et/ou de sorte que le produit à cuire dans le récipient de produit à cuire (2) est exposé à des températures définies pendant un certain temps.

12. Système de cuisson (100) selon l'une des revendications précédentes, **caractérisé en ce que** le dispositif de cuisson (1) comprend au moins un poste de cuisson (21) qui peut être chauffé par la source de chauffage (11) et sur lequel peut être placé le récipient de produit à cuire (2).

13. Procédé pour faire fonctionner un système de cuisson (100) qui est conçu selon l'une des revendications 8 à 12, dans lequel la source de chauffage (11) est commandée par au moins un dispositif de commande (4), **caractérisé en ce qu'**un récipient de produit à cuire (2) utilisé de manière fonctionnelle est automatiquement détecté, **en ce qu'**un transfert de chaleur spécifiquement latent est effectué dans la cavité (6) du récipient de produit à cuire (2) au moyen de l'au moins un fluide de travail (16), **en ce qu'**au moins une grandeur caractéristique pour une pression dans la cavité (6) est détectée et mise à la disposition du dispositif de commande (4), et **en ce que** la source de chauffage (11) est commandée au moins temporairement en fonction de la grandeur détectée par le dispositif de commande (4).
